# EUROPÄISCHE PATENTSCHRIFT

(11) **EP 2 361 272 B1**
(45) Veröffentlichungstag und Bekanntmachung des Hinweises auf die Patenterteilung: **13.03.2013**
(21) Anmeldenummer: 09748769.8
(22) Anmeldetag: 03.11.2009
(51) Int. Cl.: C08G 65/26, C08G 65/336, C11D 1/00

(54) **ADSORPTIONSMITTEL ZUR ABTRENNUNG GEFÄRBTER VERBINDUNGEN AUS WÄSSRIGEN ZUBEREITUNGEN**
ADSORPTION AGENT FOR SEPARATING DYED COMPOUNDS FROM AQUEOUS FORMULATIONS
ADSORBANT POUR L'EXTRACTION DE COMPOSÉS COLORÉS CONTENUS DANS DES PRÉPARATIONS AQUEUSES

(30) Priorität: 22.12.2008 DE 102008064197
(43) Veröffentlichungstag der Anmeldung: 31.08.2011
(73) Patentinhaber: Henkel AG & Co. KGaA, 40589 Düsseldorf (DE)
(72) Erfinder: BEDFORD, Oliver, 64372 Ober-Ramstadt (DE); KROPP, Daniela, 96129 Strullendorf (DE); GLESIUS, Marina, 64372 Ober-Ramstadt (DE); MUSOLF, Olaf, 31582 Nienburg/Weser (DE)
(86) Internationale Anmeldenummer: PCT/EP2009/064516
(87) Internationale Veröffentlichungsnummer: WO 2010/072457

(56) Entgegenhaltungen:
- WO-A1-2007/096056
- DE-A1-102004 031 938

## Beschreibung

Die Erfindung liegt auf dem Gebiet der Adsorptionsmittel zur Abtrennung von störenden Stoffen, insbesondere gefärbten Verbindungen aus wässrigen Zubereitungen, Waschflotten oder Abwässern.

Es ist seit langen Jahren bekannt, Farbstoff-haltige Wässer durch Adsorptionsmittel, zum Beispiel Aktivkohle oder dergleichen zu reinigen. Wenngleich die dazu eingesetzten Stoffe für viele Anwendungen effektiv genug sind, so besteht doch ein Bedarf nach selektiven Adsorptionsmitteln für Farbstoffe.

In der Veröffentlichung "Ureasil Gels as a highly efficient adsorbent for water Purification", Chem. Mater. 2006, 18, 4142 - 4146, werden Adsorptionsmittel beschrieben, die durch Vernetzung von Polyethern über Siloxanendgruppen hergestellt worden sind. Die dort beschriebenen Polyether sind allerdings linear, sodass Netzwerke nur über die Mehrfunktionalität der Siloxanendgruppen entstehen können.

In der deutschen Offenlegungsschrift DE 10 2006 009 004 werden multifunktionelle sternförmige Präpolymere mit Silylendgruppen beschrieben. Die dort bezeichneten Produkte bilden auf harten Oberflächen hydrophile Beschichtungen, die einen schmutzabweisenden Effekt zeigen.

Vor dem Hintergrund dieses Standes der Technik ist es Aufgabe der Erfindung, ein verbessertes Adsorptionsmittel zur Entfernung von Farbstoffen und dergleichen aus wässrigen Flotten bereitzustellen.

Dies gelingt durch Schaffung eines Adsorptionsmittel zur Abtrennung gefärbter Verbindungen aus wässrigen Flotten, herstellbar nach einem Verfahren, bei dem man in einem ersten Reaktionsschritt einen mehrfunktionellen Alkohol durch Umsetzung mit einem Alkylenoxid zu einem sternförmigen OH-terminierten Polyether umsetzt, in einem zweiten Reaktionsschritt den Polyether mit einer Silanverbindung so umsetzt, dass im Mittel mehr als eine Alkoxysilangruppe pro MolekülPolyether vorhanden ist und in einem dritten Reaktionsschritt durch Kondensation in Gegenwart von Säuren ein Vernetzungsprodukt erzeugt, wobei gewünschtenfalls weitere Siloxan-gruppenhaltige Modifizierungsmittel miteingebaut werden können und wonach man in einem abschließenden Behandlungsschritt die so erhaltenen vernetzten Produkte abtrennt und gewünschtenfalls trocknet oder vermahlt.

Ein weiterer Gegenstand der Erfindung sind Wasch- oder Reinigungsmittel, enthaltend Tensid und ein Adsorptionsmittel.

Bei den erfindungsgemäßen Produkten handelt es sich um die Vernetzungsprodukte sogenannter reaktiver Sternpolymere. Der Aufbau der Produkte ist im einzelnen komplex, läßt sich daher am besten über ein bevorzugtes Herstellverfahren beschreiben. Allerdings können gleiche oder zumindest sehr ähnliche Produkte auch nach anderen Verfahren dargestellt werden.

Die erfindungsgemäßen Adsorptionsmittel basieren zunächst auf einer zentralen Einheit, einem mehrfunktionellen Alkohol. Als mehrfunktionelle Alkohole können hierbei Alkohole wie Glycerin, Trimethylolpropan, Pentaeritrit, Zuckeralkohole wie Sorbit, deren Di- und Trimere, unterschiedliche Zucker, deren Oligomere und deren Reaktionsprodukte eingesetzt werden. Einzige Voraussetzung für die Auswahl dieser Stoffe ist, das sie über eine OH-Funktionalität von 2 und höher verfügen. Eine geeignete OH-Funktionalität liegt zwischen 2 und 20, insbesondere zwischen 3 und 12. Für die Praxis hat sich eine OH-Funktionalität zwischen 6 und 8 besonders bewährt.

Die erfindungsgemäßen Adsorptionsmittel enthalten desweiteren Polyetherketten. Diese Polyetherketten werden bevorzugt durch Umsetzung der vorgenannten mehrfunktionellen Alkohole mit Alkylenoxiden hergestellt. Bevorzugt sind hier Alkylenoxide mit 2 bis 4 C-Atomen, insbesondere Ethylenoxid und/oder Propylenoxid. Über das Verhältnis von Ethylenoxid zu Propylenoxid ist der Fachmann in der Lage die Hydrophilie der Adsorptionsmittel anzupassen. Für viele Fallgestaltungen sind daher Verhältnisse von Ethylenoxid zu Propylenoxid zwischen 20 : 80 und 80 : 20 geeignet.

Die erfindungsgemäßen Adsorptionsmittel enthalten weiterhin Silylgruppen. Nach dem bevorzugten Herstellverfahren für die Adsorptionsmittel werden diese durch Reaktion der OH-Endgruppen der sternförmigen Präpolymere mit funktionellen Silanderivaten eingeführt. Dazu kommen in der Regel alle die funktionellen Silanderivate in Frage, die eine funktionelle Gruppe aufweisen, welche gegenüber den Endgruppen der Präpolymer-Vorstufe reaktiv ist. Beispiele sind Amino-Silane, wie (3-Aminopropyl)triethoxysilan und N-(2-Aminoethyl)(3-aminopropyl)trimethoxysilan, (Meth)acrtylat-Silane wie (3-Methacryloxypropyl)trimethoxysilan, (Methacryloxymethyl)-triethoxysilan (Methacryloxymethyl)methyldimethyloxysilan und (3-Acryloxypropyl)trimethoxysilan, Isocyanato-Silane wie (3-Isocyanatopropyl)trimethoxysilan (3-Isocyanatopropyl)triethoxysilan (Isocyanatomethyl)methyl-Dimethoxysilan und (Isocyanato-methyltrimethoxysilan, Aldehyde-Silane wie Triethoxysilylundecanal und Triethoxysilylbutylaldehyde, Epoxy-Silane wie (3-Glycidoxypropyl)-trimethoxysilan), Anhydridsilane wie 3-(Triethoxysilyl)propylbernsteinsäureanhydrid, HalogenSilane wie Chloromethyltrimethoxysilan, 3-Chloropropylmethyldimethoxysilan, Hydroxyl-Silane wie Hydroxymethyltrieetoxysilane sowie Tetraethylsilikat (TEOS), die kommerziell beispielsweise bei der Wacker Chemie GmbH (Burghausen), der Gelest Inc. (Morrisville, USA) oder ABCR GmbH & Co KG (Karlsruhe) erhältlich sind und nach bekannten Verfahren hergestellt werden können. Besonders bevorzugt werden Isocyanato-Silane bzw. Anhydrid-Silane mit hydroxyterminierten sternförmigen Polymeren umgesetzt. Bei einer vollständigen Umsetzung aller Hydroxyenden mit Isocyanatosilanen erhält man erfindungsgemäße sternförmige Präpolymere, welche ausschließlich Reste mit Siloxanendgruppen tragen. Diese sind angebunden über eine Urethangruppe sowie die Atomgruppe, die im Ausgangs-Isocyanatosilan zwischen der Isocyanatgruppe und der Silylgruppe steht. Bei einer vollständigen Umsetzung aller Hydroxyenden mit Anhydridsilanen, beispielsweise 3-(Triethoxysilyl)propylbernsteinsäureanhydrid, erhält man erfindungsgemäße sternförmige Präpolymere, welche ausschließlich Siloxanendgruppen tragen. Diese sind angebunden über eine Estergruppe sowie die Atomgruppe, die im Ausgangs-Anhydridsilan zwischen der Anhydridgruppe und der Silylgruppe steht.

Die erfindungsgemäßen Adsorptionsmittel lassen sich bevorzugt durch Vernetzung der zuvor beschriebenen Sternpolymeren mit Siloxanendgruppen herstellen. Die Vernetzung wird bevorzugt im Saueren durchgeführt. Geeignet sind pH-Werte zwischen 2 und 6. Dabei können organische wie auch anorganische Säuren eingesetzt werden.

Besonders bevorzugte erfindungsgemäße Adsorptionsmittel sind mit Stickstoffgruppen modifiziert. Besonders bevorzugt ist es Adsorptionsmittel aufzubauen, die über sekundäre oder tertiäre Aminogruppen, Ammoniumgruppen, Amidgruppen, insbesondere cyclische Amide, oder Aminoxidgruppen verfügen. Für die Adsorption zahlreicher Farbstoffe ist es insbesondere bevorzugt Adsorptionsmittel einzusetzen, die über Pyrrolidonseitengruppen, Imidazolseitengruppen und/oder Pyrridin-N-oxidgruppen verfügen.

Herstellbar sind derartige bevorzugte Adsorptionsmittel, indem man ein Isocyanat-funktionelles Siloxan umsetzt mit Aminoderivaten von Imidazol oder Pyrrolidon, also beispielsweise mit N(3-Aminopropyl)-Pyrrolidon oder N(3-Amino)imidazol oder ähnlichen im Handel erhältlichen Derivaten.

Die so erhaltenen Siloxane werden beim Kondensationsschritt vor Zugabe der Säure mit den Siloxan modifizierten sternförmigen Präpolymeren gemischt und gemeinsam der saueren Kondensation unterzogen.

Nach einer bevorzugten Ausführungsform der Erfindung werden die Adsorptionsmittel nach ihrer Herstellung abgetrennt, getrocknet und gewünschtenfalls vermahlen. Dabei ist es oft möglich, aus den durch Mahlen erhaltenen Pulver Pellets oder andere Formteile durch Pressen herzustellen, um leichtere Dosierung und Zugabe zu Flüssigkeiten zu ermöglichen oder um die Adsorptionsmittel in Säulen oder Filterkartuschen zu verpacken.

Ein weiterer Gegenstand der Erfindung sind tensidhaltige Wasch- oder Reinigungsmittel, enthaltend ein erfindungsgemäßes Adsorptionsmittel. Das Adsorptionsmittel ist insbesondere in Mengen von 0,01 Gew.-% bis 10 Gew.-%, vorzugsweise von 0,1 Gew.-% bis 8 Gew.-%, bezogen auf gesamtes Mittel, in ihnen enthalten.

Farbübertragungsinhibitoren sollen verhindern, dass gefärbte textile Flächengebilde nach der Wäsche einen veränderten Farbeindruck hervorrufen. Diese Farbeindrucksveränderung gewaschener, d.h. sauberer, Textilien kann zum einen darauf beruhen, dass Farbstoffanteile durch den Wasch- beziehungsweise Reinigungsprozess vom Textil entfernt werden ("Verblassen"), zum anderen können sich von andersfarbigen Textilien abgelöste Farbstoffe auf dem Textil niederschlagen ("Verfärben"). Der Verfärbungsaspekt kann auch bei ungefärbten Wäschesstücken eine Rolle spielen, wenn diese zusammen mit farbigen Wäschestücken gewaschen werden. Um diese unerwünschten Nebeneffekte des Entfernens von Schmutz von Textilien durch Behandeln mit üblicherweise tensidhaltigen wäßrigen Systemen zu vermeiden, enthalten Waschmittel, insbesondere wenn sie als sogenannte Color- oder Buntwaschmittel zum Waschen farbiger Textilien vorgesehen sind, Wirkstoffe, die das Ablösen von Farbstoffen vom Textil verhindern oder zumindest das Ablagern von abgelösten, in der Waschflotte befindlichen Farbstoffen auf Textilien vermeiden sollen. Sinngemäß das gleiche gilt für die Behandlung gefärbter beziehungsweise die gleichzeitige Behandlung farbiger und ungefärbter harter Oberflächen, beispielsweise beim Reinigen von Geschirr.

Besonders ausgeprägt ist die Verhinderung des Anfärbens von weißen oder auch andersfarbigen Textilien beziehungsweise harten Oberflächen durch aus Textilien beziehungsweise harten Oberflächen herausgewaschene Farbstoffe durch den Einsatz der vorstehend beschriebenen Adsorptionsmittel.

Ein weiterer Gegenstand der Erfindung ist daher die Verwendung eines voranstehend beschriebenen Adsorptionsmittels zur Vermeidung der Übertragung von Farbstoffen von gefärbten Textilien oder harten Oberflächen auf ungefärbte oder andersfarbige Textilien oder harte Oberflächen bei deren gemeinsamer Wäsche beziehungsweise Reinigung mit insbesondere tensidhaltigen wäßrigen Lösungen. Die erfindungsgemäße Verwendung des Adsorptionsmittels kann dabei dadurch erfolgen, dass man das Adsorptionsmittel einer durch Einsatz eines beliebigen Wasch- oder Reinigungsmittels herstellbaren wäßrigen Flotte zusetzt, die zum Waschen oder Reinigen von Textilien oder harten Oberflächen eingesetzt wird; vorzugsweise wird sie allerdings durch den Einsatz eines erfindungsgemäßen Wasch- oder Reinigungsmittels, welches das Adsorptionsmittel enthält, realisiert.

Ein erfindungsgemäß Wasch- oder Reinigungsmittel enthält neben dem vorstehend beschriebenen Adsorptionsmittel mindestens ein Tensid, wobei anionische, nichtionische, zwitterionische und/oder amphotere Tenside eingesetzt werden können. Bevorzugt sind aus anwendungstechnischer Sicht Mischungen aus anionischen und nichtionischen Tensiden. Der Gesamttensidgehalt des Wasch - oder Reinigungsmittels liegt vorzugsweise im Bereich von 0,5 Gew.-% bis 60 Gew.-% und besonders bevorzugt von 1 Gew.-% bis 45 Gew.-%, bezogen auf das gesamte Wasch- oder Reinigungsmittel.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO, 4 EO oder 7 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind erfindungsgemäß einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen - und Propylenoxid auf Fettalkohole erhältlich.

Außerdem können als weitere nichtionische Tenside auch Alkylglycoside der allgemeinen Formel RO(G)ₓ eingesetzt werden, in der R einen primären geradkettigen oder methylverzweigten, insbesondere in 2-Stellung methylverzweigten, aliphatischen Rest mit 8 bis 22, vorzugsweise 12 bis 18 C-Atomen bedeutet und G das Symbol ist, das für eine Glycosideinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4. Alkylglucoside sind bekannte, milde Tenside.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester.

Auch nichtionische Tenside vom Typ der Aminoxide, beispielsweise N-Kokosalkyl-N,N-dimethyl-aminoxid und N-Talgalkyl-N,N-dihydroxyethylaminoxid, und der Fettsäurealkanolamide können geeignet sein. Weitere geeignete Tenside sind Polyhydroxyfettsäureamide.

Der Gehalt an nichtionischen Tensiden beträgt in dem Wasch- oder Reinigungsmittel bevorzugt 5 bis 30 Gew.-%, vorzugsweise 7 bis 20 Gew.-% und insbesondere 9 bis 15 Gew.-%, jeweils bezogen auf das gesamte Wasch- oder Reinigungsmittel.

Neben den nichtionischen Tensiden kann das Wasch- oder Reinigungsmittel auch anionische Tenside enthalten. Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), zum Beispiel die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche als Handelsprodukte der Shell Oil Company unter dem Namen DAN^{®} erhalten werden können, sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Magnesiumsalze vorliegen. Vorzugsweise liegen die anionischen Tenside in Form ihrer Natriumsalze vor. Ein weiteres bevorzugtes Gegenion für anionische Tenside ist Cholin.

Der Gehalt eines Wasch- oder Reinigungsmittels an anionischen Tensiden kann normalerweise bis zu 30 Gew.-%, bezogen auf das gesamte Wasch- oder Reinigungsmittel, betragen, und liegt vorzugsweise im Bereich von 0,5 Gew.-% bis 25 Gew.-%. Insbesondere in erfindungsgemäßen Reinigungsmitteln für harte Oberflächen, die in maschinellen Reinigungsverfahren, beispielsweise bei der Reinigung von Geschirr, eingesetzt werden sollen, können anionische Tenside gegebenenfalls ganz fehlen.

Zusätzlich zu dem erfindungsgemäßen Adsorptionsmittel und dem/den Tensid(en) kann das Wasch- oder Reinigungsmittel weitere Inhaltsstoffe enthalten, die die anwendungstechnischen und/oder ästhetischen Eigenschaften des Wasch- oder Reinigungsmittels weiter verbessern. Im Rahmen der vorliegenden Erfindung enthält das Wasch- oder Reinigungsmittel vorzugsweise zusätzlich einen oder mehrere Stoffe aus der Gruppe der Gerüststoffe, Bleichmittel, Bleichkatalysatoren, Bleichaktivatoren, Enzyme, Enzymstabilisatoren, Elektrolyte, nichtwässrigen Lösungsmittel, pH-Stellmittel, Parfüme, Parfümträger, Fluoreszenzmittel, Farbstoffe, Verdicker, Desintegrations(hilfs)mittel, Hydrotope, Schauminhibitoren, Silikonöle, Soil-Release-Polymere, Vergrauungsinhibitoren, optischen Aufheller, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, weichmachenden Komponenten, Schwermetallkomplexbildner, Abrasivstoffe, Füllmittel, Treibmittel sowie UV-Absorber.

Hinsichtlich erfindungsgemäß vorzugsweise einsetzbaren Gerüststoffen (Buildern), Tensiden, Polymeren, Bleichmitteln, Bleichaktivatoren, Bleichkatalysatoren, Lösungsmitteln, Verdickern, optischen Aufhellern, Vergrauungsinhibitoren, Knitterschutzmitteln, Antistatika, Glaskorrosionsinhibitoren, Korrosionsinhibitoren, "Soil-Repellents", Farbübertragungsinhibitoren, Schauminhibitoren, Abrasivstoffen, Desintegrations(hilfs)mitteln, Acidifizierungsmitteln, Farbstoffen, Duftstoffen, antimikrobiellen Wirkstoffen, UV-Absorbern, Enzymen, Enzymstabilisatoren und Treibmitteln sowie deren bevorzugten Einsatzmengen wird auf die Offenlegungsschrift WO2008/107346 verwiesen.

Das Wasch- oder Reinigungsmittel kann neben dem erfindungswesentlichen Adsorptionsmittel gewünschtenfalls einen konventionellen Farbübertragungsinhibitor enthalten, etwa ein Polymer oder Copolymer von cyclischen Aminen wie beispielsweise Vinylpyrrolidon und/oder Vinylimidazol. Als Farbübertragungsinhibitoren geeignete Polymere umfassen Polyvinylpyrrolidon (PVP), Polyvinylimidazol (PVI), Copolymere von Vinylpyrrolidon und Vinylimidazol (PVP/PVI), Polyvinylpyridin-N-oxid, Poly-N-carboxymethyl-4-vinylpyridiumchlorid sowie Mischungen aus diesen. Besonders bevorzugt werden Polyvinylpyrrolidon (PVP), Polyvinylimidazol (PVI) oder Copolymere von Vinylpyrrolidon und Vinylimidazol (PVP/PVI) eingesetzt. Die Polyvinylpyrrolidone (PVP) besitzen bevorzugt ein mittleres Molekulargewicht von 2.500 bis 400.000 und sind kommerziell beispielsweise von ISP Chemicals als PVP K 15, PVP K 30, PVP K 60 oder PVP K 90 oder von der BASF als Sokalan® HP 50 oder Sokalan® HP 53 erhältlich. Die Copolymere von Vinylpyrrolidon und Vinylimidazol (PVP/PVI) weisen vorzugsweise ein Molekulargewicht im Bereich von 5.000 bis 100.000 auf. Kommerziell erhältlich ist ein PVP/PVI-Copolymer beispielsweise von der BASF unter der Bezeichnung Sokalan® HP 56.

Die Menge an derartigem zusätzlichen Farbübertragungsinhibitor bezogen auf die Gesamtmenge des Wasch- oder Reinigungsmittels liegt, falls vorhanden, bevorzugt im Bereich von 0,01 bis 2 Gew.-%, insbesondere von 0,05 bis 1 Gew.-% und mehr bevorzugt von 0,1 bis 0,5 Gew.-%.

Als neben dem erfindungsgemäßen Adsorptionsmittel gegebenenfalls zusätzlich enthaltende farbübertragungsinhibierende Wirkstoffe können aber auch enzymatische Systeme, umfassend eine Peroxidase und Wasserstoffperoxid beziehungsweise eine in Wasser Wasserstoffperoxidliefernde Substanz, eingesetzt werden. Der Zusatz einer Mediatorverbindung für die Peroxidase, zum Beispiel eines Acetosyringons, eines Phenolderivats oder eines Phenotiazins oder Phenoxazins, ist in diesem Fall bevorzugt, wobei gewünschtenfalls zusätzlich noch die oben genannten polymeren Farbübertragungsinhibitoren eingesetzt werden können.

Der pH-Wert eines flüssigen Wasch- oder Reinigungsmittels liegt bevorzugt zwischen 4 und 10, besonders bevorzugt zwischen 6,5 und 9 und am meisten bevorzugt zwischen 7 und 8,8.

Flüssige erfindungsgemäße Wasch- oder Reinigungsmittelmittel weisen bevorzugt Viskositäten im Bereich von 200 bis 5000 mPas auf, wobei Werte zwischen 300 und 2000 mPas und insbesondere 400 und 1000 mPas besonders bevorzugt sind. Die Bestimmung der Viskosität kann nach bekannten Methoden, z.B mit Hilfe eines Brookfield-Viskosimeter LVT-II bei 20 U/min und 20°C, Spindel 3, erfolgen.

Die erfindungsgemäßen Wasch- oder Reinigungsmittel können zum Waschen und/oder Reinigen von textilen Flächengebilden, wie beispielsweise Kleidungsstücken, Teppichen oder textilen Wandbespannungen, oder zum Reinigen von harten Oberflächen, wie beispielsweise Fußbodenoberflächen, Badezimmerkacheln, Arbeitsflächen für die Nahrungsmittelzubereitung, oder Geschirr, verwendet werden.

Die erfindungsgemäßen Wasch- und Reinigungsmittel können als Flüssigkeit oder in Form von festen Teilchen vorliegen, dann insbesondere als Pulver, Granulate, Extrudate oder auch als Formkörper, wie zum Beispiel Tabletten. Ihre Herstellung erfolgt mittels üblicher und bekannter Methoden und Verfahren.

### Beispiele

### Beispiel 1:

### Herstellung unfunktionalisierter Gele

### Ausgangstoffe:

Silylterminiertes Sternpolymer, hergestellt nach Beispiel 1 der DE10 2006 009 004 A1.

Pufferlösung pH 3 (Citrat/Salzsäure, Merck, 1.09883 Titrisol)

### Durchführung:

a) 4 g des Sternpolymers mit 16 g der Pufferlösung eingewogen und geschüttelt. Anschließend die Probe eine Zeit stehen lassen, damit die Blasen aufsteigen konnten (Produkt ist dabei nach 1 h geliert) und dann bei 50 °C mehrere Stunden ungerührt weiter gelieren gelassen. Produkt im Exsikkator zum Trocknen aufbewahrt.
b) 12 g des Sternpolymers mit 48 g Pufferlösung eingewogen und geschüttelt bis sich eine augenscheinlich homogene Mischung bildet. Die Mischung einige Minuten ins Ultraschallbad gestellt damit die Luftblasen aufsteigen. Die Mischung bei 50 °C über Nacht gelieren lassen. Dabei entsteht ein Gel, das in Bodennähe leicht trüb ist und oben trotzdem einige Blasen aufweist. Das Gel wurde zunächst im Exsikkator getrocknet und anschließend im Trockenschrank bei 50°C getrocknet.

### Ergebnis:

7. Tag:
   a) Das Gewicht ist nicht gefallen. Die Proben zum Trocknen bei 50 °C in den Trockenofen gestellt
   b) Das Gewicht ist um 13,74 g gefallen, Masseverlust 22,9%
9. Tag: a) das Gewicht ist um 5,23 g vom Ausgangsgewicht gefallen, Verlust 26,15%
   b) das Gewicht ist um 17,36 g vom Startgewicht gefallen, die Proben zum Trocknen bei 50 °C in den Trockenschrank gestellt, Verlust 28,93%
10. Tag: a) das Gewicht ist um 8,64 g gefallen, Masseverlust 43,2%
   b) das Gewicht ist um 25,94 g gefallen, Verlust 43,23%
15. Tag: a) das Gewicht ist um 13,11g gefallen, Masseverlust 65,55%
   b) das gewicht ist um 45,82 g gefallen, Masseverlust 76,37%
16. Tag: a) die Masse bleibt konstant
   b) die Masse ist um 45,90 g gefallen, Masseverlust 76,5%
17. Tag: a) unverändert
   b) die Masse ist um 45,93 g gefallen, Masseverlust 76,55%
18. Tag: a) unverändert
   b) die Masse ist konstant

### Beispiel 2:

### Verwendung unfunktionalisierter Gele als Adsorbens für Farbstoffe aus wässriger Lösung.

### Getestete Farbstoffe:

Orange II C.I. (Acid Orange 7); Molekulargewicht: 350,33 g/mol; Lieferant: Aldrich; Lot.: 10903HC-028

Crystal Violet; Molekulargewicht: 407,99 g/mol; Lieferant: Aldrich; Lot.: 077K07401

Pyrene-1,3,6,8-tetrasulfonic acid tetrasodium salt hydrate; Molekulargewicht: 610,42 g/mol; Lieferant: Fluka; Lot.: 1325712 42907284

Acid Blue 113 (Telon marine AMF); Lieferant: DyStar; Charge: NG47633

### Durchführung:

Es wurden in einen 100 ml Maßkolben Lösungen mit einer Farbstoffkonzentration von 5 mg in 100 ml vollentsalztem Wasser (für Crystal Violet 1 mg / 100 ml) angesetzt. Es wurden UV-vis Spektren der Lösungen aufgenommen (Schichtdicke: 1 cm). Anschließend wurden jeweils 120 mg getrocknetes Hydrogel aus Beispiel 1 a) (= 30g/l Farbstofflösung) in jede Küvette gegeben und ein Tag stehen gelassen. Anschließend wurden erneut UV-vis Spektren aufgenommen. Die Abnahme der Lichtabsorption ist direkt proportional der im Hydrogel adsorbierten Farbstoffmenge.

Wie zu erkennen ist, stellt das Hydrogel ein effektives Adsorbens für alle untersuchten Farbstoffe dar. Absorption Acid Orange bei ca. 475 nm: ohne Hydrogel 0,43, mit Hydrogel nach 1 Tag 0,17 Absorption Acid Blue bei ca. 570nm: ohne Hydrogel 0, 27, mit hydrogel nach 1 Tag 0, 10

### Beispiel 3:

### Verwendung unfunktionalisierter Gele als Entfärbungsmittel für Rotwein

120 mg getrocknetes Hydrogel werden zusammen mit einem handelsüblichen Rotwein in eine Küvette gegeben und 1 Tag stehen gelassen. Nach einem Tag ist das Gel dunkelrot gefärbt, die überstehende Lösung ist nur noch schwach bräunlich gefärbt.

Die erfindungsgemäßen Gele lassen sich also auch für die Adsorption von Naturstoffen nutzen.

### Beispiel 4:

### Herstellung mikronisierter Gele

### Ausgangstoffe:

Hydro-Stellan S, silylterminiertes Sternpolymer (SusTech)

Pufferlösung pH3 (Citrat/Salzsäure, Merck, 1.09883 Titrisol)

Durchführung:
a) 3 g Hydro-STELLAN S mit 12 g der Pufferlösung eingewogen und geschüttelt. Anschließend die Probe stehen gelassen, damit die Blasen aufsteigen können. Die Probe geliert dabei nach ca. 15 min. Dann bei 50 °C die Probe im Trockenschrank bis zur Massekonstanz getrocknet.
b) Hydro-STELLAN S pur wird bei Raumtemperatur ohne Zusätze in einer GC-Ampulle ausgehärtet (Dauer: 28Tage) und anschließend aus der GC-Flasche geschnitten/entnommen und umgefüllt.
c) Die Hälfte der Probe a) wird nach dem Trocknen mit flüssigem Stickstoff abgekühlt bis die Probe hart ist und so in einer Reibschale zerkleinert/pulverisiert.
d) Hydro-STELLAN S pur wird bei 50 °C ausgehärtet (11 Tage) und mit flüssigem Stickstoff abgekühlt bis die Probe hart ist und anschließend in einer Reibschale zerkleinert/pulverisiert.
e) Eine 20% Mischung aus Hydro-STELLAN S und Pufferlösung pH 3 wird unter Rühren mit einem Dissolverrührer bei 50 °C geliert und dann bei 50 °C im Trockenschrank bis zur Massekonstanz getrocknet.

### Ergebnis:

a) 3,03g schnittfeste Tablette
b) klebrige Masse
c) feine Flocken
d) klebrige kleine Klumpen
e) 7,2g unterschiedlich große Klumpen

### Beispiel 5:

### Verwendung mikronisierter Gele als Adsorbens für Acid Blue 113

### Ausgangsstoffe:

Proben a)-e) aus Beispiel 4

Acid Blue 113, Telon marine AMF (DyeStar)

### Durchführung:

Es wurden in einen 100 ml Maßkolben Lösungen mit einer Farbstoffkonzentration von 2 mg in 100 ml vollentsalztem Wasser angesetzt. Es wurden UV-vis Spektren der Lösungen aufgenommen (Schichtdicke: 1 cm). Anschließend wurden jeweils 120 mg getrocknetes Hydrogel (= 30g/l Farbstofflösung) in jede Küvette gegeben und 2 Stunden bzw. einen Tag stehen gelassen. Anschließend wurden erneut UV-vis Spektren aufgenommen. Alle Spektren wurden zur besseren Vergleichbarkeit rechnerisch auf die Absorption bei 700 nm normiert (verschwindende Acid Blue Extinktion und geringe Streuverluste).

Bei den Proben 4 b) und 4 d) sind Störungen durch starke Lichtstreuung zu beobachten.

### Aussehen der Lösungen:

Probe 4 a): Dicker harter spröder Klumpen, in Farbstofflösung auch sehr fester Klumpen, Farbstoff lagert sich an den Rändern an.
Probe 4 b): Weicher, klebriger, gummiartiger Klumpen, quillt in Farbstofflösung.
Probe 4 c): Grobes Pulver, in Farbstofflösung als Pulver stabil.
Probe 4 d): Am Anfang klebriges Pulver, wird aber zu einem mittelweichen Klumpen nach einigen Tagen in der Farbstofflösung.
Probe 4 e): Mittelweiche Klumpen, quillt in Farbstofflösung.
Insbesondere die Proben 4 c) und 4 e) zeigen einen stark klärenden Effekt der überstehenden Lösung.

### Beispiel 6:

### Verwendung von Polyvinylpyrrolidon zur Funktionalisierung der Gele

Es wird eine Mischung aus 3 g Hydro-STELLAN S (entspricht 20%) und 0,3 g Sokalan HP 53 (BASF) 10% bezogen auf Sternpolymer) in 12 g Puffer pH 3 hergestellt und geschüttelt. Dann wird bei 50 °C die Probe im Trockenschrank bis zur Massekonstanz getrocknet.

Nach 11 Tagen 3,12 g massekonstantes Produkt, Produkt anschließend in der Reibschale zerkleinert.

### Beispiel 7:

### Verwendung von Polyvinylpyrroldion/Polyvinylimidazol-Copolymere zur Funktionalisierung der Gele

Es wird eine Mischung aus 3 g Hydro-STELLAN S (entspricht 20%) und 0,3 g Sokalan HP 56 (BASF) 10% bezogen auf Sternpolymer) in 12 g Puffer pH 3 hergestellt und geschüttelt. Dann wird bei 50 °C die Probe im Trockenschrank bis zur Massekonstanz getrocknet.

Nach 11 Tagen massekonstant 3,06 g Produkt, Produkt im Mörser zerkleinert.

### Beispiel 8:

### Herstellung eines Pyrrolidon Silans

### Ausgangstoffe:

3-Isocyanatopropyltrimethoxysilan 95 %; M = 205,29 g/mol; d = 1,084 g/ml (ABCR);
1-(3-Aminopropyl)-2-pyrrolidon ca. 98 %; M = 142,29 g/mol; d = 1,014 g/ml (Aldrich);
Isopropanol, IPA.

### Durchführung:

Mit Hilfe einer Spritze werden 0,619 g (0,571 ml; 2,864 mmol; 1,0 eq) 3-Isocyanatopropyltrimethoxysilan zügig entnommen und zusammen mit 1,290 g IPA und einem Rührfisch in einem 50 ml Rundkolben vorgelegt. Der Rundkolben wird mit einem Tropftrichter bestückt, der nun mit 0,413 g (0,407 ml; 2,846 mmol; 1,0 eq) 1-(3-Aminopropyl)-2-pyrrolidon (Entnahme mittels Spritze) und 1,118 g IPA befüllt wird. Unter kräftigem Rühren wird die Amino-Pyrrolidon-Lösung zum NCO-Silan zugetropft (etwa ein Tropfen alle zwei Sekunden). Um eine stärkere Erwärmung der Reaktionslösung zu vermeiden, wird der Kolben mit einem Wasserbad gekühlt.

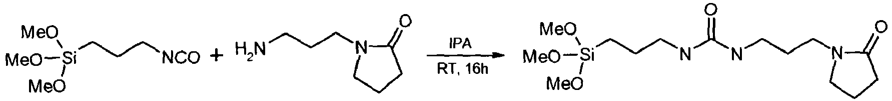

Nach 16 Stunden liegt eine leicht gelbliche Reaktionslösung vor.

### Ergebnis:

### Das Pyrrolidon-Silan liegt in Form einer theoretisch 29,1 %igen Lösung in IPA vor.

### Beispiel 9:

### Herstellung pyrrolidon-funktionalisierter Gele

2x 3 g Hydro-STELLAN S und 0,99 g des Pyrrolidon-Silans (10% des Silans bezogen auf Hydro-STELLAN S) aus Beispiel 8 wurden mit 13,2 g Puffer pH 3 gemischt, geschüttelt, stehen gelassen bis es geliert und anschließend eine Probe bei 50 °C und eine bei 80 °C im Trockenschrank bis zur Massekonstanz getrocknet => Proben 9 a) und 9 b).

Probe 9 a): die Probe ist nach 7 Tagen massekonstant und hat eine Masse von 3,52 g, dann wurde sie im Mörser zerkleinert.

Probe 9 b) die Probe ist nach 3 Tagen massekonstant und hat eine Masse von 3,28 g, dann wurde sie im Mörser zerkleinert.

### Beispiel 10:

### Herstellung eines Imidazol-Silans

### Ausciangstoffe:

3-Isocyanatopropyltrimethoxysilan 95 %; M = 205,29 ^{g}/ₘₒₗ; d = 1,084 ^{g}/ₘₗ (ABCR);
1-(3-Aminopropyl)-imidazol 98 %; M = 125,18 ^{g}/ₘₒₗ; d = 1,049 ^{g}/ₘₗ (Aldrich);
Isopropanol, IPA.

### 4. Durchführung:

Mit Hilfe einer Spritze werden 0,656 g (0,605 ml; 3,036 mmol; 1,0 eq) 3-Isocyanatopropyltrimethoxysilan zügig entnommen und zusammen mit 1,303 g IPA und einem Rührfisch in einem 50-ml-Rundkolben vorgelegt. Der Rundkolben wird mit einem Tropftrichter bestückt, der nun mit 0,387 g (0,369 ml; 3,030 mmol; 1,0 eq) 1-(3-Aminopropyl)-imidazol und 1,001 g IPA (Entnahme mittels Spritze) befüllt wird. Unter kräftigem Rühren wird die Amino-Imidazol-Lösung zum NCO-Silan zugetropft (etwa ein Tropfen alle zwei Sekunden). Um eine stärkere Erwärmung der Reaktionslösung zu vermeiden, wird der Kolben mit einem Wasserbad gekühlt.

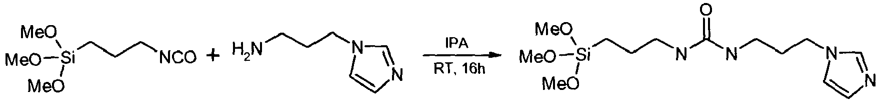

Nach 16 Stunden liegt eine leicht gelbliche Reaktionslösung vor.

### Ergebnis:

### Das Imidazol-Silan liegt in Form einer theoretisch 30,3%igen Lösung in IPA vor.

### Beispiel 11:

### Herstellung imidazol-funktionalisierter Gele

2x 3 g Hydro-STELLAN S und 1,031 g Imidazol-Silan aus Beispiel 10 (10% Silan bezogen auf Hydro-STELLAN S) wurden mit 13,2 g Puffer pH 3 gemischt, geschüttelt, stehen gelassen bis es geliert und anschließend eine Probe bei 50 °C und eine bei 80 °C im Trockenschrank bis zur Massekonstanz getrocknet => Proben 11 a) und 11 b)
Probe 11 a): die Probe ist nach 7 Tagen massekonstant und hat eine Masse von 3,32 g, dann wurde sie im Mörser zerkleinert.
Probe 11 b): die Probe ist nach 6 Tagen Massekonstant und hat eine Masse von 3,22 g, dann wurde sie im Mörser zerkleinert.

### Beispiel 12:

### Verwendung funktionalisierter Gele als Adsorbens für Acid Blue 113

Es wurden in einen 100 ml Maßkolben Lösungen mit einer Farbstoffkonzentration von 2 mg in 100 ml vollentsalztem Wasser angesetzt. Es wurden UV-vis Spektren der Lösungen aufgenommen (Schichtdicke: 1 cm). Anschließend wurden jeweils 120 mg getrocknetes Hydrogel (= 30g/l Farbstofflösung) in jede Küvette gegeben und 2 Stunden bzw. einen Tag stehen gelassen. Anschließend wurden erneut UV-vis Spektren aufgenommen. Alle Spektren wurden zur besseren Vergleichbarkeit rechnerisch auf die Absorption bei 700 nm normiert (verschwindende Acid Blue Extinktion und geringe Streuverluste).

Insbesondere die Proben 9a, 9b und 11 "a" oder "b" oder "11a" und "11b" zeigen einen starken Entfärbungseffekt der überstehenden Flotte.

## Patentansprüche

1. Adsorptionsmittel zur Abtrennung gefärbter Verbindungen aus wässrigen Flotten, herstellbar nach einem Verfahren, bei dem man in einem ersten Reaktionsschritt einen mehrfunktionellen Alkohol durch Umsetzung mit einem Alkylenoxid zu einem sternförmigen OH-terminierten Polyether umsetzt, in einem zweiten Reaktionsschritt den Polyether mit einer Silanverbindung so umsetzt, dass im Mittel mehr als eine Alkoxysilangruppe pro Molekülpolyether vorhanden ist und in einem dritten Reaktionsschritt durch Kondensation in Gegenwart von Säuren ein Vernetzungsprodukt erzeugt wird, wobei gewünschtenfalls weitere Siloxan-gruppenhaltige Modifizierungsmittel miteingebaut werden können und wonach man in einem abschließenden Behandlungsschritt die so erhaltenen vernetzten Produkte abtrennt und gewünschtenfalls trocknet oder vermahlt.

2. Adsorptionsmittel nach Anspruch 1, **dadurch gekennzeichnet, dass** die zu ihrer Herstellung eingesetzte Alkoholkomponente eine Funktionalität von 2 bis 20, insbesondere 3 bis 12, aufweist.

3. Adsorptionsmittel nach einem der Ansprüche 1 oder 2, **dadurch gekennzeichnet, dass** die zu ihrer Herstellung eingesetzte Alkoholkomponente ausgewählt ist aus der Gruppe bestehend aus Glycerin, Trimethylolpropan, Pentaeritrit, Zucker, Zuckeralkoholen sowie Di- oder Trimeren von Zuckern oder Zuckeralkohlen sowie Derivaten dieser Verbindungen.

4. Adsorptionsmittel nach einem der Ansprüche 1 bis 3, **dadurch gekennzeichnet, dass** zu ihrer Herstellung als Alkylenoxid Ethylenoxid und/oder Propylenoxid eingesetzt worden ist.

5. Adsorptionsmittel nach einem der Ansprüche 1 bis 4, **dadurch gekennzeichnet, dass** das Molverhältnis Ethylenoxid zu Propylenoxid zwischen 80 : 20 und 20 : 80 liegt.

6. Adsorptionsmittel nach einem der Ansprüche 1 bis 5, **dadurch gekennzeichnet, dass** die bei ihrer Herstellung eingesetzten Silanverbindungen Silane oder Halogensilane mit 1 bis 3 Alkoxidgruppen sind.

7. Adsorptionsmittel nach einem der Ansprüche 1 bis 5, **dadurch gekennzeichnet, dass** die zu ihrer Herstellung eingesetzten funktionalisierten Silane mindestens eine Isocyanatgruppe und 1 bis 3 Alkoxidgruppen enthalten.

8. Adsorptionsmittel nach einem der Ansprüche 1 bis 7, **dadurch gekennzeichnet, dass** zu ihrer Herstellung ein Vernetzungsschritt bei einem pH zwischen 1 und 6 durchgeführt wurde.

9. Adsorptionsmittel nach den Ansprüchen 1 bis 8, **dadurch gekennzeichnet, dass** als Modifizierungsmittel bei der Vernetzung Alkoxidsilane eingesetzt wurden, die über eine zusätzliche stickstoffhaltige funktionelle Gruppe verfügen, insbesondere eine Amingruppe, Amidgruppe, Ammoniumgruppe oder Amin-N-oxidgruppe.

10. Adsorptionsmittel nach den Ansprüchen 1 bis 9, **dadurch gekennzeichnet, dass** das zur Herstellung eingesetzte Modifizierungsmittel eine Imidazol-, Pyridin-N-oxid- und/oder eine Pyrolidongruppe enthält.

11. Wasch- oder Reinigungsmittel, enthaltend Tensid und ein Adsorptionsmittel gemäß einem der Ansprüche 1 bis 10.

12. Verwendung eines Adsorptionsmittels gemäß einem der Ansprüche 1 bis 10 zur Vermeidung der Übertragung von Farbstoffen von gefärbten Textilien oder harten Oberflächen auf ungefärbte oder andersfarbige Textilien oder harte Oberflächen bei deren gemeinsamer Wäsche beziehungsweise Reinigung mit insbesondere tensidhaltigen wäßrigen Lösungen.

## Claims

1. An adsorption agent for separating dyed compounds from aqueous baths, manufacturable according to a method in which, in a first reaction step, a polyfunctional alcohol is converted, by reaction with an alkylene oxide, into a star-shaped OH-terminated polyether; in a second reaction step, the polyether is reacted with a silane compound in such a way that at an average more than one alkoxysilane group per molecule of polyether is present; and in a third reaction step, a crosslinked product is generated by condensation in the presence of acids, such that further siloxane-group-containing modifying agents can also be incorporated if desired; and after which, in a concluding treatment step, the crosslinked products thus obtained are separated out and, if desired, dried or ground.

2. The adsorption agent according to Claim 1, wherein the alcohol component used for the manufacture thereof has a functionality from 2 to 20, in particular 3 to 12.

3. The adsorption agent according to one of Claims 1 or 2, wherein the alcohol component used for the manufacture thereof is selected from the group consisting of glycerol, trimethylolpropane, pentaerythritol, sugars, sugar alcohols, and di- or trimers of sugars or sugar alcohols, as well as derivatives of said compounds.

4. The adsorption agent according to one of Claims 1 to 3, wherein ethylene oxide and/or propylene oxide was used as an alkylene oxide for the manufacture thereof.

5. The adsorption agent according to one of Claims 1 to 4, wherein the molar ratio of ethylene oxide to propylene oxide is between 80 : 20 and 20 : 80.

6. The adsorption agent according to one of Claims 1 to 5, wherein the silane compounds used for the manufacture thereof are silanes or halogen silanes having 1 to 3 alkoxide groups.

7. The adsorption agent according to one of Claims 1 to 5, wherein the functionalized silanes used for the manufacture thereof contain at least one isocyanate group and 1 to 3 alkoxide groups.

8. The adsorption agent according to one of Claims 1 to 7, wherein a crosslinking step at a pH between 1 and 6 was carried out for the manufacture thereof.

9. The adsorption agent according to Claims 1 to 8, wherein alkoxide silanes that possess an additional nitrogen-containing functional group, in particular an amine group, amide group, ammonium group, or amine N-oxide group, were used as a modifying agent in crosslinking.

10. The adsorption agent according to Claims 1 to 9, wherein the modifying agent used for the manufacture thereof contains an imidazole group, pyridine N-oxide group, and/or pyrrolidone group.

11. A washing or cleaning agent containing surfactant and an adsorption agent according to one of Claims 1 to 10.

12. Use of an adsorption agent according to one of Claims 1 to 10 to avoid the transfer of dyes from dyed textiles or hard surfaces onto undyed or differently colored textiles or hard surfaces when they are respectively laundered or cleaned together with, in particular, surfactant-containing aqueous solutions.

## Revendications

1. Agent d'adsorption pour la séparation de composés colorés à partir de bains aqueux, que l'on peut préparer conformément à un procédé dans lequel, dans une première étape réactionnelle, on fait réagir un alcool polyvalent par mise en réaction avec un oxyde d'alkylène pour obtenir un polyéther en étoile à terminaison OH, dans une deuxième étape réactionnelle, on fait réagir le polyéther avec un composé de silane de telle sorte que l'on obtient la présence dans l'agent de plus d'un groupe alcoxysilane par molécule de polyéther, et dans une troisième étape réactionnelle, par condensation en présence d'acides, on obtient un produit de réticulation, procédé dans lequel des agents de modification supplémentaires contenant des groupes siloxane peuvent être incorporés de manière conjointe si on le souhaite, et après lequel, dans une étape de traitement ultérieur, on sépare les produits réticulés ainsi obtenus et, si on le souhaite, on les sèche ou on les broie.

2. Agent d'adsorption selon la revendication 1, **caractérisé en ce que** le composant d'alcool mis en oeuvre pour sa préparation présente une fonctionnalité de 2 à 20, en particulier de 3 à 12.

3. Agent d'adsorption selon l'une des revendications 1 ou 2, **caractérisé en ce que** le composant d'alcool mis en oeuvre pour sa préparation est choisi parmi le groupe constitué par le glycérol, le triméthylolpropane, le pentaérythritol, des sucres, des alcools de sucres, ainsi que des dimères ou des trimères de sucres ou d'alcools de sucre, et des dérivés de ces composés.

4. Agent d'adsorption selon l'une quelconque des revendications 1 à 3, **caractérisé en ce qu'**on met en oeuvre, pour sa préparation, à titre d'oxyde alkylène, de l'oxyde d'éthylène et/ou de l'oxyde de propylène.

5. Agent d'adsorption selon l'une quelconque des revendications 1 à 4, **caractérisé en ce que** le rapport molaire de l'oxyde d'éthylène à l'oxyde de propylène se situe entre 80 : 20 et 20 : 80.

6. Agent d'adsorption selon l'une quelconque des revendications 1 à 5, **caractérisé en ce que** les composés de silane mis en oeuvre pour sa préparation sont des silanes ou des halogénosilanes contenant de 1 à 3 groupes alcoxydes.

7. Agent d'adsorption selon l'une quelconque des revendications 1 à 5, **caractérisé en ce que** les silanes fonctionnalisés mis en oeuvre pour sa préparation contiennent au moins un groupe isocyanate et de 1 à 3 groupes alcoxydes.

8. Agent d'adsorption selon l'une quelconque des revendications 1 à 7, **caractérisé en ce que**, pour sa préparation, on met en oeuvre une étape de réticulation à un pH entre 1 et 6.

9. Agent d'adsorption selon l'une quelconque des revendications 1 à 8, **caractérisé en ce que** l'on met en oeuvre, à titre d'agent de modification lors de la réticulation, des alcoxyde-silanes qui disposent d'un groupe fonctionnel azoté supplémentaire, en particulier un groupe amine, un groupe amide, un groupe ammonium ou un groupe N-oxyde d'amine.

10. Agent d'adsorption selon l'une quelconque des revendications 1 à 9, **caractérisé en ce que** l'agent de modification mis en oeuvre pour sa préparation contient un groupe imidazole, un groupe N-oxyde de pyridine et/ou un groupe pyrrolidone.

11. Agent de lavage ou de nettoyage, contenant un ou plusieurs agents tensioactifs et un agent d'adsorption selon l'une quelconque des revendications 1 à 10.

12. Utilisation d'un agent d'adsorption selon l'une quelconque des revendications 1 à 10, pour éviter le transfert de colorants de textiles colorés ou de surfaces dures colorées sur des textiles ou des surfaces dures non colorées ou possédant une autre couleur, lors de leur lavage respectivement de leur nettoyage commun avec en particulier des solutions aqueuses contenant un ou plusieurs agents tensioactifs.
